# EUROPEAN PATENT APPLICATION

(11) **EP 4 144 667 A1**
(43) Date of publication of application: **08.03.2023**
(21) Application number: 22193819.4
(22) Date of filing: 05.09.2022
(51) Int. Cl.: B65F 1/14

(54) **INTERACTIVE AUTOMATED BIN, AND SYSTEM THEREOF**

(30) Priority: 06.09.2021 IT 202100022970
(71) Applicant: Elsel S.r.l., 19125 La Spezia (SP) (IT)
(72) Inventor: FALCONI, Sandro, 19125 La Spezia (IT)
(74) Representative: Ferriero, Paolo

(57) **Abstract**

The present invention relates an automated bin (1) for the collection of waste, comprising a container (10) having at least one opening (100) for inserting waste, user interaction means (5, 31, 52) for interacting with a user, a logic control unit (U), operatively connected to said user interaction means (5, 31, 52), at least one proximity sensor (S1) to detect the presence of a user at said automated bin (1), wherein said at least one proximity sensor (S1) is arranged at said automated bin (1) and connected to said logic control unit (U), electrical power supply means (15) to supply electrical power to said user interaction means (5, 31, 52), to said logic control unit (U) and to said proximity sensor (S1), wherein said logic control unit (U) is configured to receive a signal relating to the presence of a user at said automated bin (1) by said at least one proximity sensor (S1), and activate said user interaction means (5, 31, 52).

The present invention also relates to a waste collection system.

## Description

The present invention concerns an interactive automated bin.

The present invention also concerns a waste collection system comprising such an automated bin.

### Field of the invention

In particular, the present invention concerns an automated bin for the collection of the waste, designed and constructed to interact with the user and in particular to facilitate the user in waste management and to ensure the cleaning of the area adjacent to said automated bin.

In the following the description will relate to an automated bin for the management of municipal waste such as, for example, domestic, vegetable and similar solid waste, but it is clear that the same should not be considered limited to this specific use.

### Prior art

At present, a bin of known type for the collection of municipal waste consists of a simple container.

The waste is placed in said container and the bin is emptied periodically.

There is usually a sticker on a bin that indicates the waste that can be thrown inside.

Usually, the bins of known type also have different colours, depending on the type of waste that can be thrown inside.

However, one drawback of such bins of known type is that there is no control over the waste that is thrown inside.

It is therefore the responsibility of healthcare operators to check the contents of the bins during waste collection and, if necessary, to report the incorrect disposal of waste.

In general, it is difficult to identify a user who has thrown the waste in a bin that is not intended to receive said waste. It is therefore difficult to correct such a behaviour of such a user, for example by means of a fine.

A first disadvantage of a bin of known type is that the information on the bin can often be misleading to the user.

A second disadvantage of a bin of known type is that said bin does not have any mechanism capable of guaranteeing the cleaning of the area surrounding said bin.

This can negatively affect the waste management cycle, preventing a user from using the bin and increasing the pollution of the area surrounding the bin.

Finally, a further disadvantage of a bin of known type is that said bin is provided with buttons or levers for opening/closing the bin, resulting in hygienic problems for users who use said bin.

### Aim of the invention

The aim of the present invention is to overcome said disadvantages by providing an automated bin for the collection of the waste configured to interact with a user, in order to improve the separate collection of the waste.

A second aim of the invention is to provide an automated bin for the collection of the waste that allows monitoring the area surrounding the bin itself, so as to reduce environmental pollution in said area.

A third aim of the invention is to provide an automated bin for the collection of the waste that allows optimizing the use of energy resources.

A fourth aim of the invention is to provide an automated bin for the collection of the waste that has high reliability, and is simple to make, so as to have a competitive cost compared to a bin of known type.

### Object of the invention

Therefore, an automated bin for the collection of the waste is a specific object of the present invention, comprising:
- a container, having at least one opening for inserting waste,
- user interaction means for interacting with a user,
- a logic control unit, operatively connected to said user interaction means,
- at least one proximity sensor, for detecting the presence of a user at said automated bin, wherein said at least one proximity sensor is arranged at said automated bin and connected to said logic control unit;
- electrical power supply means, connected to said user interaction means, to said logic control unit and to said proximity sensor, to supply electrical power to said user interaction means, to said logic control unit and to said proximity sensor,
wherein said logic control unit is configured to:
receive a signal relating to the presence of a user at said automated bin by said at least one proximity sensor, and
activate said user interaction means.

According to the invention, said at least one proximity sensor may comprise a code reader. In such a case, the automated bin may comprise storage means in which a plurality of codes are stored, and said logic control unit may be configured to:
receive a code read by said code reader,
compare it with the codes stored in said storage means, and
activate said user interaction means if said read code is associated with at least one of said stored codes.

Furthermore, according to the invention, said user interaction means may comprise one or more of: at least one screen for viewing videos; at least one sound-emitting device, at least one microphone, at least one button, at least one video surveillance device.

In particular, said user interaction means may comprise at least one screen and said automated bin may comprise at least one support module for supporting said at least one screen, wherein said support module is removably coupled to a portion of said container. In this way, said at least one screen can be installed on said support module.

Furthermore, according to the invention, said electrical power supply means may comprise at least one photovoltaic solar panel, arranged on said support module.

Also according to the invention, said automated bin can comprise at least one filling sensor connected to said logic control unit to detect a filling parameter of said container.

In this case, each stored code can be referred to a user and said logic control unit can be configured to read the values of said filling parameter detected by said at least one filling sensor and store data relating to the variation of said filling parameter in said storage means for each user.

According to the invention, said automated bin can also comprise a housing structure for housing said container.

Furthermore, according to the invention, said electrical power supply means may comprise at least one transformer, wherein said at least one transformer may comprise:
- a first support coupled to said housing structure,
- a first coil wound on said first support, and
- a first terminal connected to said first coil and to an electrical power supply network, and
- a second support coupled to said container,
- a second coil wound on said second support, and
- a second terminal connected to said second coil,
so as to generate a magnetic flux between said first coil and said second coil when a power supply voltage is applied to said first coil, by means of said first terminal.

Alternatively, according to the invention, said electrical power supply means may comprise:
- at least one first electrical contact arranged on said container,
- at least one second electrical contact arranged on said housing structure. Said at least one first electrical contact may be configured to contact said at least one second electrical contact, and may comprise a first support element and a first spring connected to said first support element, and said at least one second electrical contact may comprise a second support element and a second spring connected to said second support element.

A waste collection system is a further object of the present invention, comprising
at least one automated bin for the collection and emptying of the waste according to the present invention, and
a power supply column connected to a source of electricity and to said electrical power supply means.

### Brief description of the figures

The present invention will now be described, in an illustrative but nonlimiting manner, according to preferred embodiments thereof, with particular reference to the figures of the attached drawings, wherein:
figure 1 is a front view of a first embodiment of an automated bin for the collection of the waste, according to the present invention, in which said automated bin comprises a container for the collection of the waste, electrical power supply means and a logic control unit;
figure 2A is a side view of a variant of the container for the collection of the waste of an automated bin according to the present invention provided with screens;
figure 2B is a front view of a variant of the bin for the collection of the waste of figure 2A;
figure 3A is a front view of a second embodiment of an automated bin for the collection of the waste, according to the present invention, provided with video screens;
figure 3B is a front view of a third embodiment of an automated bin for the collection of the waste, according to the present invention, provided with video screens;
figure 3C is a front view of a fourth embodiment of an automated bin for the collection of the waste, according to the present invention, provided with video screens;
figure 3D is a front view of a fifth embodiment of an automated bin for the collection of the waste, according to the present invention, provided with video screens;
figure 3E is a front view of a variant of a covering element for a container of an automated bin according to the present invention, in which said covering element is provided with video screens;
figure 3F is a top view of the covering element of figure 3E;
figure 4A is a schematic view of a first embodiment of a waste collection system, according to the present invention, comprising at least an automated bin and a power supply column;
figure 4B is a schematic view of a second embodiment of a waste collection system, according to the present invention, comprising at least one automated bin and a power supply column;
figure 5A is a front view of a third embodiment of a waste collection system, according to the present invention, comprising at least an automated bin and a power supply column;
figure 5B is a top view of the system of figure 5A;
figure 6 is a schematic view of the operating diagram of a proximity sensor arranged on an automated bin according to the present invention;
figure 7A is a side view of a variant of a container comprising a waste weighing unit coupled to a slide arranged at an opening of the container for inserting waste;
figure 7B is a perspective view showing in detail the waste weighing unit of figure 7A;
figure 7C is a schematic view showing a detail of the weighing unit of figure 7B;
figure 8A is a side view of a variant of the container of the automated bin of figure 1, in which said container comprises a plurality of pairs of LEDs arranged within said container, in which each pair of LEDs comprises a first LED and a second LED;
figure 8B is a top view of the container of figure 8A;
figure 9 is a schematic view of an example of a logic control unit of an automated bin according to the present invention;
figure 10 is a schematic view of a first embodiment of electrical power supply means for supplying the automated bin according to the present invention;
figure 11 shows a circuit diagram of a second embodiment of the electrical power supply means for supplying the automated bin according to the present invention;
figure 12 is a schematic view of an embodiment of a primary circuit of the circuit diagram of figure 11;
figure 13 is a schematic view showing in detail a coupling between two portions of the electrical power supply means of figure 10;
figure 14A is a schematic view of a third embodiment of the electrical power supply means for supplying the automated bin according to the present invention;
figure 14B is a schematic view of a fourth embodiment of the electrical power supply means for supplying the automated bin according to the present invention;
figure 15 is a schematic view of a circuit for sending signals to a display of the automated bin, according to the present invention, for displaying alphanumeric contents;
figure 16 is a schematic view of an integrated circuit comprising signalling LEDs that can be installed on an automated bin according to the present invention;
figure 17 is a schematic view of a sound-generating circuit for generating sounds, to be installed in an automated bin according to the present invention;
figure 18 is a schematic view of a circuit to allow a user to communicate with the logic control unit of the automated bin, via a microphone, and to allow said logic control unit to communicate with the user, via a speaker;
figure 19A is a side view of an electronic key lock that can be installed on an automated bin according to the present invention,
figure 19B is a front view of the electronic key lock of figure 19A;
figure 20 is a schematic view of a circuit diagram for the electronic key lock of figure 19A; and
figure 21 is a schematic view of an embodiment of a circuit comprising a plurality of buttons for the user, which can be installed on an automated bin according to the present invention.

In the various figures, similar parts will be indicated with the same numerical references.

### Detailed description

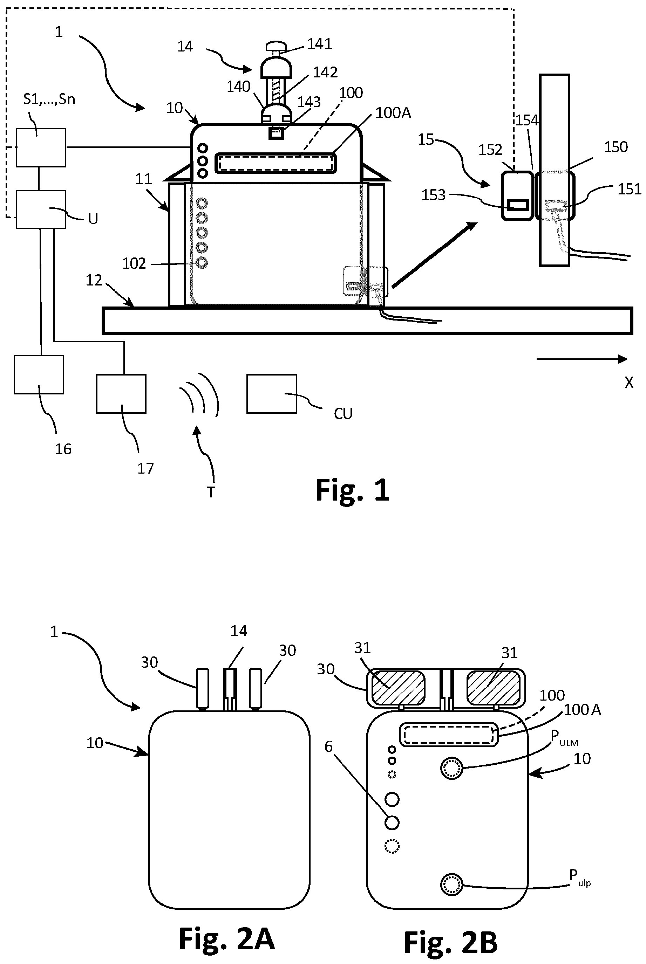

Figure 1 shows an automated bin for the collection of the waste indicated by reference number 1.

Said automated bin 1 comprises:
- a container 10 for containing waste,
- at least one sensor S1,...,Sn, in particular at least one proximity sensor S1, connected to said container 10, to detect a user approaching,
- a logic control unit U, operatively connected to said at least one sensor S1,
- electrical power supply means 15, connected to said at least one sensor S1 and to said logic control unit U, to supply electrical power to said at least one sensor S1 and to said logic control unit U,
- user interaction means for interacting with a user, connected to the logic control unit U and supplied by the electrical power supply means 15.

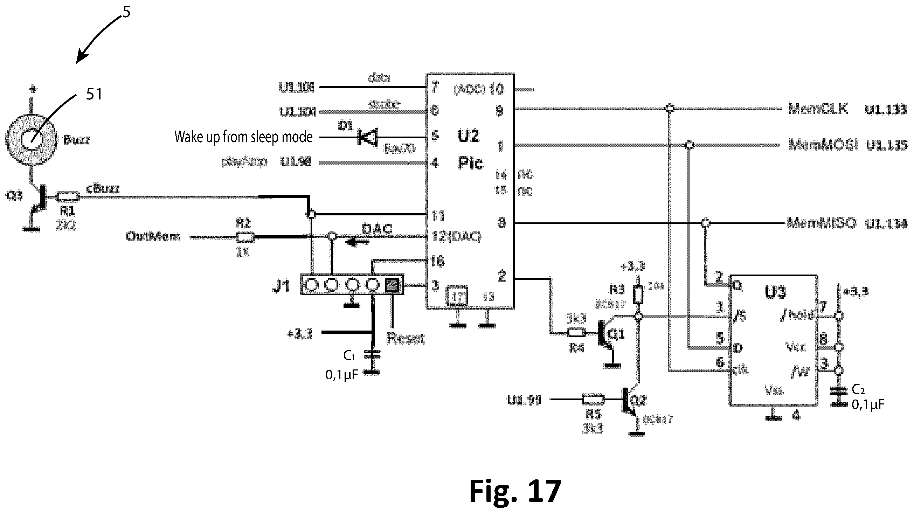

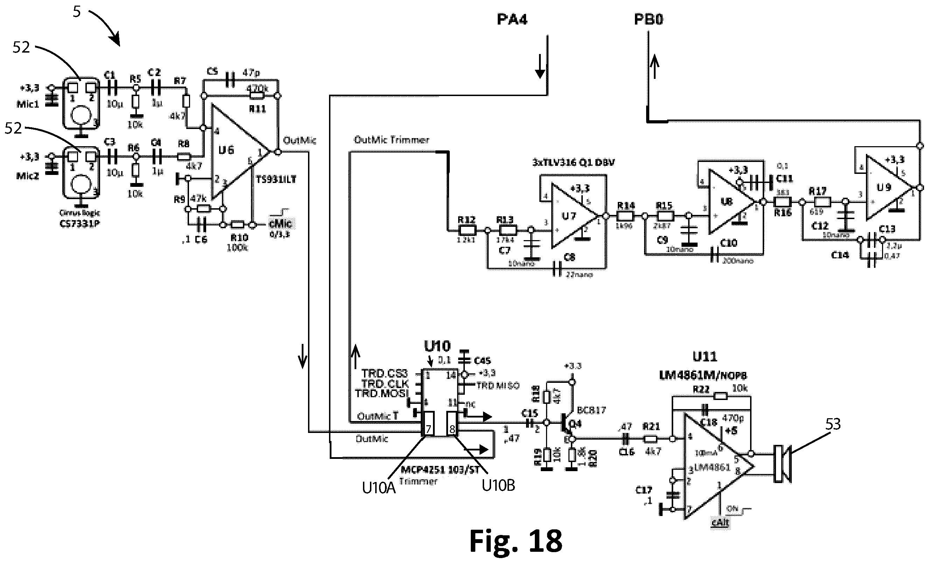

Said user interaction means may comprise at least one audio-video device 31, wherein said audio-video device 31 is a screen, and/or at least one sound-emitting device 5, wherein said sound-emitting device 5 may comprise one or more buzzers 51 (e.g., a buzzer 51 is shown in figure 17), and/or one or more microphones 52 (e.g., two microphones 52 are shown in figure 18) and/or one or more loudspeakers 53 (e.g., a loudspeaker 53 is shown in figure 18).

Said user interaction means may further comprise one or more displays for displaying alphanumeric contents and/or one or more lights or video surveillance devices.

The automated bin 1 comprises transceiver means 17, connected to said logic control unit U, and connectable, by means of a telematic communication network T, to a central unit CU.

In particular, the central unit CU can be configured to receive data from a plurality of automated bins 1 and send command signals to each automated bin 1 of said plurality of automated bins 1.

In other words, the central unit CU can be configured to implement a remote management of the automated bins 1 for the emptying thereof. The data sent from the automated bins 1 to the central unit CU can be processed to periodically empty the automated bins 1 based on the respective filling level.

In particular, the central unit CU can be connected to the automated bins 1 via an internet connection, either of the wired type or via Wi-Fi.

By way of example, the central unit CU can send by means of the internet connection a set of images to said at least one screen 31 present on the automated bin 1 depending on the responses of the users to a previous set of images detected by the sensors.

### Structure of the automated bin

Figure 1 shows an automated bin 1 comprising a container 10 and a housing structure 11 for housing said container 10.

In the example described, the container 10 is in the form of a parallelepiped.

However, the container 10 may have a shape other than a parallelepiped, without departing from the scope of protection of the present invention.

Furthermore, the capacity of the container 10 can be between 660 and 2,400 litres, with 1,100L being the one most widely used. The total load supported by such a container 10 can be comprised between 300 and 800 kg.

Said container 10 comprises one or more inlet openings or mouths 100 for inserting the waste, which can be provided with one or more anti-cutting gaskets.

In one embodiment, the container 10 has a height between 1.20 and 1.50m.

The dimensions of an opening can be 133cm x 36cm, in the case of two openings 100 the dimensions can be 45cm x 26cm or 2cm x 30cm, or in the case of a wolf's mouth opening the dimensions can be 109cm x 26cm.

In any case, the dimensions of an opening 100 may be different based on the type of waste to be inserted into the container 10.

The maximum internal volume 10 of the container, and, hence, the maximum weight when loaded, can be proportional to the type of compactor lorry intended to pick up the automated bin 1 and to the gripping member with which said compactor lorry is provided.

In addition, the bin 1 comprises one or more covers 100A to cover a respective opening 100.

In particular, the covers 100A allow the container 10 to be watertight, and prevent insects and other animals from entering said container 10, as well as preventing the escape of bad odours.

Furthermore, the upper outer surface of the container 10 can be tilted or rounded to prevent waste from being stably rested on said upper outer surface.

In particular, the covers 100A can be provided with movement means (not shown in the figures) for being moved automatically.

In this case, said movement means are connected to the electrical power supply means 15 and said at least one proximity sensor S1 for detecting a user or the hands of a user approaching an opening 100 is arranged near the cover 100A covering said opening 100.

For safety reasons, the automated container 1 is closed by means of shock absorbers, so that the closure takes place with a slow movement.

The covers 100A can be hinged to the container 10 and their opening/closing is controlled by said logic control unit U by means of the respective movement means, such as for example respective motors.

In addition, the automated bin 1 comprises a pick-up member 14 to allow a compactor lorry (not shown in the figures) to pick up the container 10 of said automated bin 1.

The pick-up member 14 comprises a hook or mushroom 140 to allow the compactor lorry to hook the container 10, a rod 141 provided with a head, a return spring 142 and a microswitch 143.

The hook 140 is shaped to be hooked by a picking arm of the compactor lorry.

In particular, the picking arm of the compactor is able to act on the rod 141, which, in turn, drives said microswitch 143.

The microswitch 143 communicates with the logic control unit U, which commands the opening of one or more discharge doors, preferably arranged at the base of said container 10, for the discharge of the waste, by means of a respective electrical lock.

In the phase in which the container 10 is hooked by the compactor lorry, the automated bin 1 is isolated from the electrical power supply (the container 10 is separated from the housing structure 11). Thus, the electrical power required by the container 10 (e.g., to drive the electrical locks to open/close the discharge doors) may be provided, for example, by a buffer battery.

As mentioned, the automated bin 1 comprises a logic control unit U.

Such a logic control unit U can be arranged on an electronic board having the terminals dedicated to the actuation or data reading services, coming from the devices used in the automation functions.

In particular, in one embodiment, the electronic components are arranged inside the container 10, preferably in the upper part of said container 10. Furthermore, the automated bin 1 comprises at least one fan (not shown in the figures), connected to the logic control unit U, for cooling one or more electrical or electronic circuits.

In the case of wet waste, the automated bin 1 may comprise a metallic or other material cover, spaced from the upper part of the container 10.

Said cover has an opening at a central area (for the passage of the pick-up member 14 described above) and allows the passage of an air flow around the container 10, so as to reduce the fermentation effect of the waste, due to the heat inside the container 10.

As can be seen in figure 1, said automated bin 1 comprises a base 12 on which said housing structure 11 is supported and mechanically connected.

The housing structure 11 is shaped and sized to at least partially contain said container 10.

Said housing structure 11 is fixed to the base 12.

Furthermore, the housing structure 11 can comprise a side opening for facilitating the emptying of the container 10.

The housing structure 11 can be provided with one or more manual buttons and at least one pedal for opening one or more covers 100A.

Said base 12 allows to position several automated bins 1 thereon.

In the present embodiment, said base 12 has a longitudinal extension along a direction X and a thickness of about 10-25 cm.

However, the shape and the dimensions of said base 12 can be different from that described, without departing from the scope of protection of the present invention.

In the embodiment described, the housing structure 11 is 1/3 to 2/3 high the height of the container 10, so that any waste outside the bin 1 does not prevent the repositioning of the container 10 inside the housing structure 11.

In fact, the height of the housing structure 11 between 1/3 and 2/3 the height of the container 10 allows the incorrectly deposited waste such as, for example, waste deposited outside the container 10, not to affect the insertion of the container 10 inside the housing structure 11.

The housing structure 11 can also have the function of a heat shield, if it is insulated.

In addition, in the present embodiment, the automated bin 1 comprises one or more signalling devices 102 such as, for example, one or more signalling LEDs arranged on said container 10, preferably in the upper part of said container 10.

Such signalling devices 102 are capable of providing data and/or information on the filling, operation, efficiency/inefficiency, maintenance and alarms related to the status of the automated bin 1.

However, in other embodiments, the type and the position of said signalling devices 102 can be different from that described. For example, the signalling devices 102 may be positioned on the housing structure 11. When the signalling devices 102 are signalling LEDs, said signalling LEDs can also be used as night lights.

In addition, the automated bin 1 can be provided with one or more receivers for voice commands, instructions and voice signals. The allocation of said receivers will be on the container 10 or on the housing structure 11, according to the model of automated bin 1 or needs.

Furthermore, said automated bin 1 comprises one or more electromechanical devices such as, for example, one or more buttons to push by hand or by foot, one or more RFID readers (transponders), one or more electronic key readers, one or more body approach sensors or one or more hand sensors, and one or more further signalling devices (not shown in the figures).

In one embodiment, said housing structure 11 can be fixed and have a height such as to avoid obstruction in the manoeuvres for the removal of any waste on the ground.

One or more buttons, one or more sensors, at least one screen 31 and one or more electronic devices can be arranged on the housing structure 11 and/or on the container 10.

The bin 1 can be conceived to be partially or totally underground.

The base 12 can be stable and anti-overturning and able to provide the automated bin 1 with a power of the order of kW, in wireless mode.

In addition, the automated bin 1 will have a suitable structure for being assembled, transported, inspected, performing ordinary or extraordinary maintenance and cleaning.

The choice of the material(s) with which to make the automated bin 1 must take into account the actions of acids, moulds, etc. and the fact that it must be cleaned periodically.

Figures 2A and 2B show an automated bin 1 comprising two support modules 30 coupled to the upper portion of the container 10.

Each support module 30 supports at least one screen 31.

In the example described, each support module 30 supports two screens 31.

In addition, the container 10 and the housing structure 11 comprise respective buttons Pᵤₗₘ, Pᵤₗₚ for activating the opening of the cover 100A.

The support modules 30 are connected to the electrical power supply means 15 for supplying the screens 31.

Furthermore, these support modules 30 are installed on the container 10 so as not to interfere with the pick-up member 14.

In particular, the support modules 30 are spaced from the pick-up member 14 to allow the container 10 to be hooked by the compactor lorry.

The screens 31 are connected to the logic control unit U.

In particular, the logic control unit U is configured to send a video signal to each of said screens 31 of said support modules 30 so that a video is displayed on said screens 31.

One or more videos may be stored in storage means 16 connected to the logic control unit U and may be periodically replaced by further videos.

In particular, the logic control unit U can be configured to receive the videos from the central unit CU and to store said videos in said storage means 16.

Furthermore, the logic control unit U can be configured to send said video signal to the screens 31 periodically or only at predetermined instants of time, for example when the proximity sensor S1 detects a user approaching.

The support modules 30 can be coupled to the container 10 in a removable manner.

The support modules 30 can be arranged on other portions of the container 10, other than the upper portion, for example on a side portion of the container 10 facing the pavement, so that the videos can be seen by the users on the pavement and that the road safety of the drivers is guaranteed.

Although not shown, the automated bin 1 may comprise any number of support modules 30, including also a single support module 30.

Although not shown, each support module 30 may support any number of screens other than two, such as even a single screen.

In one embodiment, instead of the screens 31 a support module 30 may support any image display device or a printout of an informational or advertising image.

In one variant, the support modules 30 may be arranged on the housing structure 11.

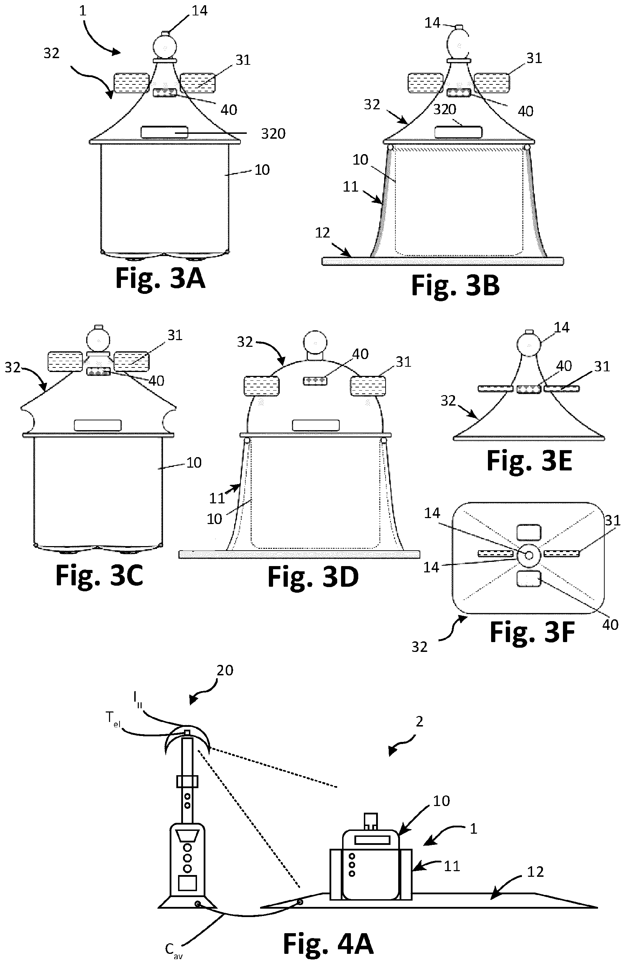

Figure 3A shows an automated container 1, according to the invention, comprising a container 10 open above (i.e. provided with an end opening positioned at the upper end of said container), with a substantially cylindrical shape and a covering element 32 to cover the opening of said container 10.

The covering element 32 comprises a further opening 320 for inserting the waste into the container 10 and a cover for closing said further opening 320.

In particular, the covering element 32 has a substantially truncated conical shape.

The walls of said covering element 32 are tilted and said further opening 320 is arranged at the base of said covering element 32.

The screens 31 are installed on a respective support module 30, arranged on the covering element 32, and project laterally with respect to said covering element 32 in the vicinity of the end portion thereof.

The gripping member 14 is arranged on the end of the covering element 32.

In place of the screens 31, in the same position, other devices for displaying images can be installed.

In addition, the covering element 32 comprises at least one photovoltaic solar panel 40 that can supply power to the electrical power supply means 15 or supply power to the automated bin 1 alternatively or in combination with the electrical power supplied by the electrical power supply means 15.

Figure 3B shows a variant of the automated bin 1 shown in figure 3A, in which the automated bin comprises a base 12 and the housing structure 11 has walls tilted with respect to the base 12.

Figure 3C shows a variant of the automated bin 1 shown in figure 3B, in which the covering element 32 having a substantially truncated conical shape provided with a recess on the base of said covering element 32.

Figure 3D shows a variant of the automated bin 1 shown in Figure 3B, in which the covering element 32 has a substantially hemisphere shape.

Figures 3E and 3F respectively show a front view and a top view of a variant of the covering element 32 with respect to the covering element of the automated bin 1 shown in figure 3A.
The screens 31 have smaller dimensions than the dimensions of the screens 31 on the covering element of the automated bin 1 shown in figure 3A and the covering element 32 comprises two photovoltaic solar panels 40, arranged on two opposite faces of the covering element 32, so as to maximize the light incident on such photovoltaic solar panels 40 during the day.

### Power supply column

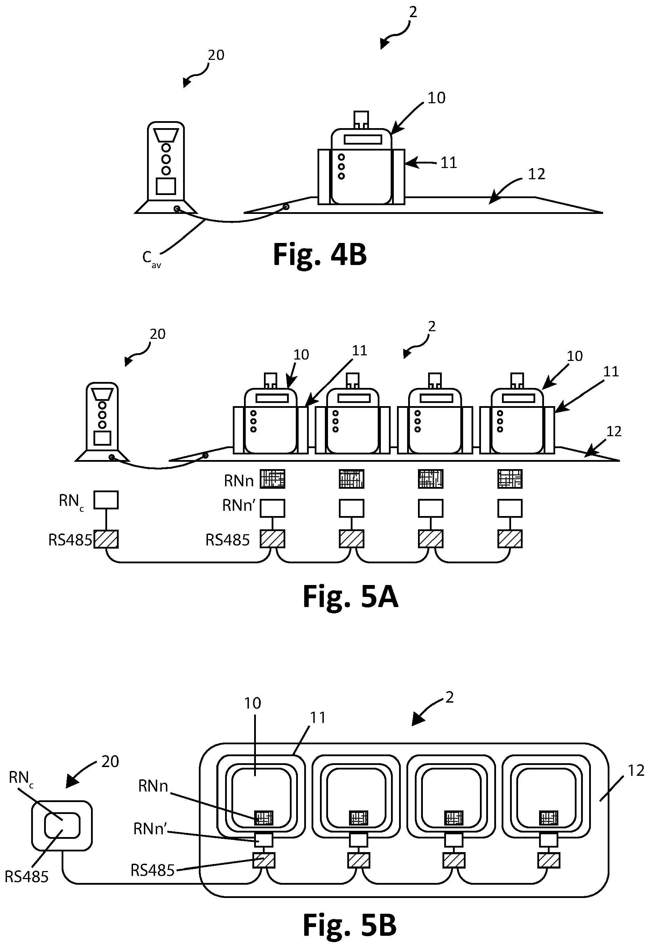

Figures 4A and 4B show a waste collection system indicated by reference numeral 2.

Said waste collection system comprises an automated bin 1 for the collection of the waste and a power supply column or pole or tower 20 connected to said first automated bin 1.

Therefore, the automated bin 1 is supplied by the power supply column 20 via said electrical power supply means 15, mentioned above.

In this way, a single power supply column 20 can supply multiple automated bins 1.

The electrical power supply means 15 may for example be connected to a power supply network (not shown in the figures) and to the base 12.

The connection between said power supply column 20 and said automated bin 1 can be underground or protected.

The power supply column 20 may comprise a further control logic for controlling the automated bins 1.

In addition, the power supply column 20 may comprise storage means for storing data relating to each automated bin 1 connected thereto.

In addition, the power supply column 20 may be equipped with one or more photovoltaic solar panels to supply electrical power.

The automated bin 1 can also be provided with a photovoltaic solar panel 40 for the purposes already described.

In the event that the power supply column 20 is not present, the components of the automated bin 1 must be supplied by said at least one photovoltaic solar panel 40.

In this case, the functions to be performed by these components can be performed by the automated bin distributed over time, for example performed one at a time.

In addition, the automated bin 1 may be provided with additional components corresponding to the components that should have been installed on the power supply column 20.

In the first embodiment of figure 4A, the power supply column 20 has a base to be rested or fixed to the ground.

In the example described, the base has an upward tapered shape.

The power supply column 20 comprises a cover that can be provided with one or more lighting elements of the area I_{II} to illuminate an area around said power supply column 20 and at least one camera Tel to record a video, arranged in such a way that at least a part of said system falls within the field of view of said camera Tel.

The power supply from the power supply column 20 arrives at the base 12 via a connection Cav which is a low voltage connection.

The power supply column 20 has the function similar to those of the car charging type.

In particular, there is a wired energy connection from the power supply column 20 to the housing structure 11, while between the housing structure 11 and the container 10 there is a wireless connection, with a "transformer" type, in which a first half of the transformer (comprising a primary winding) is on the housing structure 11 and a second half of the transformer (comprising a secondary winding) is on the container 10, with a minimisation of the possible air gap. Furthermore, powers of the order of kW can be used.

The power supply column 20 can be provided with one or more courtesy lights, and, similar to the container 10, said power supply column 20 can also have a contactless card reader, actuation buttons to be pressed by hand or foot, level indicators, at least one display, one or more recognition systems, etc.

In addition, the power supply column 20 may comprise a respective connectivity module for communicating with the central unit CU (via the internet) and a further connectivity module for communicating with the automated bins 1 (via Bluetooth).

Finally, sensors for monitoring air quality can also be installed on the power supply column 20.

Figure 4B shows a waste collection system in which the power supply column 20 is less equipped than the power supply column of the waste collection system shown in Figure 4A.

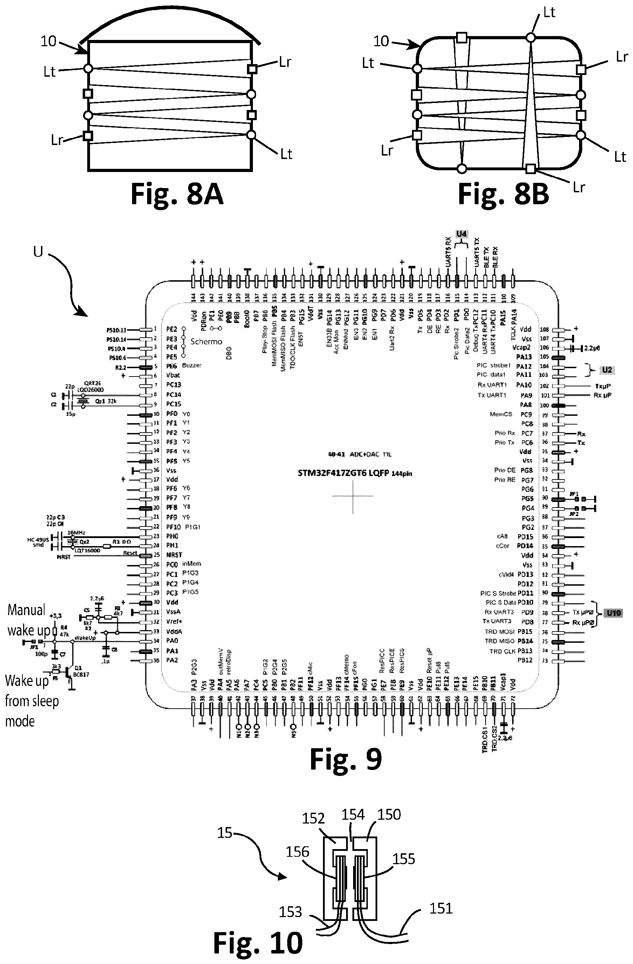

An example of a logic control unit U for exchanging data between the automated bin 1 and the power supply column 20 is shown in figure 9.

### Waste collection system

Figures 5A and 5B show the system 2 comprising a plurality of automated bins 1, as well as a base 12 and a power supply column 20 for said plurality of automated bins 1.

Each automated bin 1 is provided with a respective Bluetooth module Rnn therein, for example RN4870, which can communicate with a Bluetooth module RNc of the power supply column 20. Furthermore, the power supply column 20 is provided with a further logic control unit configured to receive the data transmitted by each logic control unit U of each automated bin 1.

Figures 5A, 5B also show further Bluetooth modules RNn', which can be contained in the housing structure 11 of a respective automated bin 1. In such a case, each Bluetooth module RNn of each automated bin 1 will be interfaced to a respective further module RNn' of a respective housing structure 11. Said further Bluetooth modules RNn' will exchange data with the Bluetooth module RNc of the power supply column 20.

Such further Bluetooth modules RNn' allow to improve the data exchange between the power supply column 20 and each automated bin 1, even when the distance between said power supply column 20 and an automated bin 1 is considerable.

Furthermore, given the continuing difficulties due to the distance, in consideration again of the fact that the devices are not in the free open field, but contained in the automated bins 1 and in the housing structures 11, a wired system can be used, created between the power supply column 20 and the housing structures 11 by means of communication protocols RS485.

It will be the task of the power supply column 20 to exchange data, for example through an Internet connection, with the central unit CU. By way of example, such communication can occur with the current WiFi 802.11ac standard.

Each power supply column 20 can be provided with a Sim router which allows connection to the internet network.

The central unit CU communicates with the router of each power supply column 20 to receive and communicate data by means of the Internet and/or by means of a telephone data network.

In particular, the UMTS - (Universal Mobile Telecommunications System) module, present in a respective router, stores the data detected by the respective automated bin 1 connected thereto, and periodically sends them to the central unit CU or at the request of said central unit CU.

Said data, stored by said plurality of power supply columns 20 are related, for example, to the remote diagnostics of the efficiency of the mechanisms of the automated bins, or data relating to air quality.

### Sensors

### Proximity sensor

As mentioned, each automated bin 1 comprises one or more proximity sensors S1 for detecting a user approaching.

In particular, each automated bin 1 can comprise a plurality of proximity sensors S1 arranged at different sides of the container 10, of the relative housing structure 11 and/or of the power supply column 20, to detect the approach side of said user. This is particularly useful in the case of containers 10 provided with multiple openings 100 or multiple screens 31, so as to activate only the covers 100A or the screens 31 arranged on the user's approach side.

Such proximity sensors S1 may be of known type, for example of the type commonly installed on automatic doors to activate the opening of such doors, or of the type in use in parking detector cars.

Such proximity sensors may therefore use different technologies, such as infrared, induction, magnetism or may be capacitive or ultrasonic sensors.

However, infrared sensors turn out to be preferable for ease of management, cost and applicability.

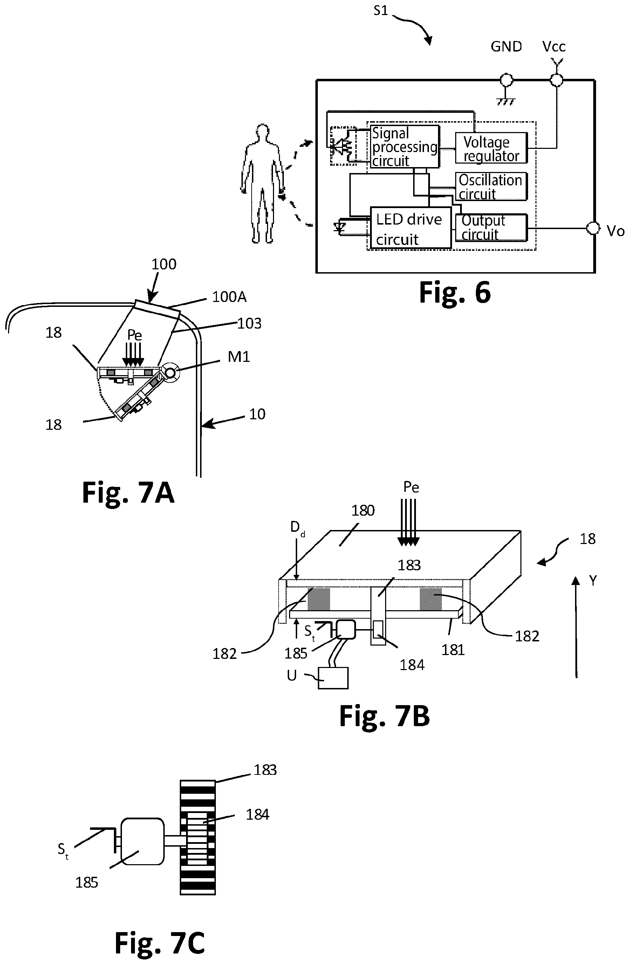

Figure 6 shows the principle diagram of a proximity sensor S1.

In particular, said proximity sensor S1 is an infrared sensor configured to emit an infrared radiation and to generate an output voltage Vo when it receives a return signal from the external environment.

The infrared radiation is emitted intermittently (square wave) to differentiate itself from the sun rays or from any other background light radiation.

The output voltage Vo is acquired by the logic control unit U.

Usually, said proximity sensor S1 is configured to operate at a temperature comprised between -10°C and +70°C.

However, there are several proximity sensors S1 of known type that can be used, without departing from the scope of the invention.

Alternatively, the proximity sensor S1 may be an ultrasonic sensor.

The use of an ultrasonic sensor has a double advantage: the possibility of detecting a user approaching and the possibility of driving away wild animals, birds, mice, insects, etc. around the area surrounding the automated bin.

As a user approaches, the logic control unit U reads the output voltage generated by the proximity sensor S1 and sends a command to activate the user interaction means.

In particular, the logic control unit U can command the execution of one or more of the following actions: the opening of the covers 100A (based on the user's approach side to the automated bin 1), the switching-on of one or more lights to illuminate the area adjacent to the automated bin 1 (wherein said lights can be twilight lights), the activation of a camera or video surveillance device to record the actions of said user near the automated bin 1, the activation of one or more signalling lights, the blocking of any waste treatment means for the treatment of the waste arranged inside the container 10, such as for example grinding blades or mechanical presses.

The logic control unit U can be configured to perform one or more of the above-mentioned actions when a user remains near the automated bin 1 for a predetermined period of time, stored in storage means 16.

In this respect, the logic control unit U can be configured to activate a timer when a user is detected by the proximity sensor S1 and, if a time greater than or equal to said predetermined period of time has elapsed, to send a control signal to one or more components, based on the action to be performed.

Furthermore, the proximity sensor S1 may comprise a motion sensor, capable of detecting a movement by a user to activate said user interaction means.

In particular, such movement may be a movement of the hand to request the opening of a cover 100A.

### Code readers

The automated bin 1 may also comprise one or more code readers (not shown), in particular of the RFID type, for recognizing the user by means of an identification code.

Such code readers may for example be configured to read the code associated with a card held by the user or a code printed on a waste bag periodically delivered to the user.

In particular, the waste bags may have a different code for the type of waste, which may be an alphanumeric code or a colour code or other. In this way, the recognition of the code of the bag will lead to the opening of a cover 100A that covers an opening by means of which waste is inserted into the container 10.

At each user recognition, the code associated with the bag is cancelled.

Advantageously, the recognition of the user can for example guarantee the opening of the cover 100A only to registered users, whose identification codes are stored within the storage means 16.

User recognition can be useful to verify the correct disposal of the waste by said user, and possibly reward the most virtuous users.

By way of example, the automated bin 1 may use known RFID-type code readers operating at 125kHz.

In particular, said RFID-type code readers are configured to read a card with a "chip" and an "antenna" for user recognition.

In use, the card is manually positioned at an antenna of the RFID-type code reader, and the RFID-type code reader will communicate the data to the logic control unit U.

The code associated with the card can be associated with one or more functions to be performed by the automated bin 1.

Similar to the other proximity sensors, the RFID-type code readers can be installed directly on the automated bin 1 (for example on the container 10 or on the housing structure 11) or on the power supply column 20.

### Filling sensors

A container 10 may further be provided with one or more filling sensors, in particular a weight sensor 18 and/or a position or volume sensor (comprising a pair of LEDs Lt, Lr), connected to the logic control unit U and configured to detect a filling parameter of the container 10, such as for example the weight or the volume of the waste inserted into the container 10.

This advantageously allows to detect the quantity of waste inserted into said container 10. This datum can be stored within the storage means 16, so as to detect the quantity of waste inserted by each user into an automated bin 1 during a time interval, for example over a period of one year, as better illustrated below.

In fact, codes relating to users may be stored in the storage means 16.

The logic control unit U can be configured to read the values of said filling parameter detected by said at least one filling sensor and store said filling parameter in said storage means 16 for each user over time.

Furthermore, in the case of a system 2 comprising a plurality of automated bins 1 for the same type of waste, the logic control unit U can be configured to send in succession an opening command to each automated bin 1, based on the received filling data.

In particular, the logic control unit U can be configured to open in succession a first automated bin 1 of said plurality of automated bins 1 and keep it open until it is completely filled, a second automated bin 1 of said plurality of automated bins 1 and keep it open until it is completely filled, and so on.

This makes it possible to optimise the phase of waste picking by a compactor lorry based on the data received from the central unit CU.

### Weight sensor

With reference to figures 7A-7C, the weight sensors may comprise or consist of a weighing unit 18.

As can be seen from figure 7A, said weighing unit 18 is arranged inside said container 10 and comprises a first plane 180 and a second plane 181, arranged parallel to said first plane 180.

Furthermore, said weighing unit 18 comprises a plurality of springs 182 arranged between said first plane 180 and said second plane 181, a rack 183 having one end fixed to said first plane 180, a toothed wheel 184 connected to said rack 183.

The first plane 180 is coupled to said second plane 181 by said plurality of springs 182 and movable with respect to said second plane 181 along a vertical direction indicated with the reference letter Y. In particular, sliding pins (not shown in the figures) can be used to allow the sliding of the first plane 180. Such sliding pins can be made of Teflon or other material and can be comprised in a bearing system.

The weighing unit 18 also comprises an encoder 185 connected to said toothed wheel 184 and to said logic control unit U. In particular, as can be seen from figures 7B and 7C, said encoder 185 is integral with the plane 181 by means of a bracket St.

Therefore, when a weight force Pe is exerted on said first plane 180, due to the insertion of the waste into the container 10, the first plane 180 moves towards said second plane 181 along said vertical direction Y, inducing a displacement of said rack 183 and of said toothed wheel 184 proportional to said weight force Pe and readable by said encoder 185.

In fact, a pressing force, such as for example the weight force Pe, will change the distance D_{d} between the two planes 180, 181, inducing a displacement of the rack 183.

Such a displacement will induce a rotation of the toothed wheel 184 connected thereto, in turn integral with an encoder 185.

The movement of the encoder 185 (in a first direction or a second direction, opposite to the first direction) provides information to the logic control unit U for determining the weight of the waste.

The weighing is initialized by the data provided by the encoder 185 to the logic control unit U.

The weighing unit 18 further comprises a motor M1, preferably a stepper motor, drivable by the logic control unit U.

Following the opening of the cover 100A, the first plane 180 remains in a stable horizontal position for a short time, for example of the order of the second or more seconds, to allow the weighing unit 18 to stabilize, providing the encoder 185 with a datum which can also be averaged, between some significant values.

If the distance Dd between said first plane 180 and said second plane 181 is a variation, for example, by 20mm, with a maximum load of 20kg, for 2 kg there is a displacement of the first plane 180 by 2mm and so on.

Such a displacement involves a further displacement of the rack 183, integral with the first plane 180, which in turn induces, by means of a rotation of the toothed wheel 184, a rotation of the encoder 185, which provides the datum to the logic control unit U.

Such a logic control unit U governs the entire process:
- opening the cover 100A for the opening 100 and preferably a safety door (not shown in the figures) below said opening 100;
- establishing the signal reading times of the encoder 185;
- moving said first plane 180 between a rest position, in which said first plane is in a horizontal position, and an operating position, in which said first plane is tilted with respect to the rest position, since it has been rotated by the motor M1 to drop the waste into the container 10, and vice versa.

The datum relating to the movement of the encoder 185 is sent to the logic control unit U to determine the weight of the waste, based on the movement of the encoder 185.

The logic control unit U can send a signal containing the weight to a display so that the weight is displayed on said display, so that it can be viewed by a user.

The logic control unit U can be configured to determine the weight of the waste inserted into the container 10 over time.

In other words, whenever a quantity of waste is inserted into a container 10, the weight is updated based on said quantity of waste.

Advantageously, the global weighing of the waste is a datum that can be sent to the central unit CU to signal the need to empty the container 10.

As can be seen from figures 7A, the opening 100 is connected to a slide 103 to favour the sliding of the waste inside the container 10.

To avoid any impediments in the sliding of the waste caused by an increase of the friction forces, for example, in the case of wet bags, presence of glues or the like, the slide 103 is connected to a further motor M2 capable of generating a vibrational motion for a safe detachment of the waste from the wall of the slide 103.

In one embodiment, said slide 103 has a free end and another end connected to the opening 100, via a hinge not shown in the drawings.

The further motor M2 can be a misaligned lever motor. The drive of said further motor M2 is commanded by the logic control unit U.

In particular, the logic control unit U is configured to drive said further motor M2 to generate a vibration of the slide 103, so that the waste with a weight force Pe is deposited on the first plane 180.

For a short time the waste is kept on the first plane 180.

As mentioned, the logic control unit U acquires information on the rotation of the encoder 185 by means of the rack 183 and the toothed wheel 184 meshed with said rack 183 and connected to the encoder 185, and since the rotation of the encoder 185 is proportional to the weight of the waste, the logic control unit U determines the weight of the waste on the basis of said rotation.

The evaluation of the weight by the logic control unit U can occur by performing the average value of several acquired values.

The weight is then managed by the software. The logic control unit U commands the release of the first plane 180 in the operating position, allowing the sliding of the waste.

Once the weighing has taken place, the opening 100 can be closed by the respective cover 100A and the first plane 180 returns to the rest position (i.e., in a horizontal position).

### Position sensor

Figures 8A, 8B show a plurality of position sensors, also called volume sensors, arranged inside the container 10 to detect the filling level of the waste in the container 10.

The filling level can be transmitted to the central unit CU for the management of the compactor lorries for the emptying of the automated bins 1.

Ultrasonic sensors are typically used.

However, the use of such ultrasonic sensors is not effective due to the disordered type of waste inside the container 10.

In the embodiment described, the position sensor comprises a plurality of pairs of LEDs, wherein each pair of LEDs is formed by a first LED or LED transmitter Lt and by a second LED or LED receiver Lr.

In particular, each first LED Lt is arranged on an inner wall of said container 10 and a respective second LED Lr is arranged on a further inner wall of said container 10, opposite to said inner wall.

With reference to each pair of LEDs, a first LED Lt is capable of emitting a light radiation towards a respective second LED Lr and said second LED Lr is capable of detecting the filling level of said container 10 based on the light radiation transmitted by said first LED Lt and received by said second LED Lr.

In particular, said pairs of LEDs are arranged inside said container 10 in such a way as to form a network of pairs of LEDs, wherein each pair of LEDs is arranged on a respective plane.

In height, the pairs of LEDs may be arranged within the container 10 at 1/4 the height of the container 10, at half the height of the container 10, at 3/4 the height of the container 10, and at 4/4 the height of the container 10.

Each first LED Lt is capable of emitting a light radiation (in particular an impulsive light radiation) and each second LED Lr is capable of receiving said light radiation.

The reception of the light radiation of the second LED of each pair of LEDs over time and the data relating to the filling level acquired by the logic control unit U allow to analytically know over time the filling level of the container 10.

After analysis, the data may be transmitted periodically to the central unit CU or at the request of the central unit CU.

The pairs of LEDs are commanded, by the logic control unit U, via an interface, and via a further interface, the logic control unit U transmits data to the power supply column 20, for example via Bluetooth.

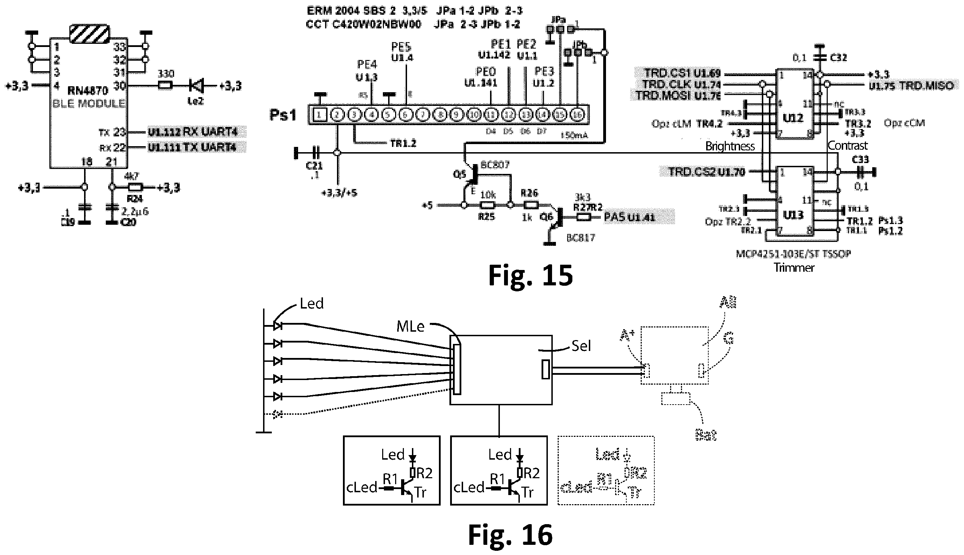

The logic control unit U is configured to send to the power supply column 20 the information relating to the filling level of the container 10 (obtained through the pairs of LEDs Lt Lr) through a UART (indicated with Tx Rx in figure 9) through a Bluetooth module (for example an RN4870 card shown in figure 15).

There is a basic circuit for each pair of LEDs Lt, Lr in the interface board. The first LED Lt is fed by electrical current pulses so that it is not disturbed by the light present in the system, and to achieve high precision.

The first LED works with infrared in a wavelength comprised between 700 and 800 nm, with a narrow angle (for example between 15° and 30°) and a high pulsed electrical current (for example between 100 and 200mA), with a duration of a pulse of some ms (for example between 1 and 10ms), and sends a radiation to the base of the second LED of phototransistor type, which transforms it into an electrical current in the collector.

By means of a load on the collector it is possible to create a voltage drop proportional to the electrical current and therefore a voltage of the on-off type, which contains the information to be used.

### Logic control unit

An example of an embodiment of the logic control unit U is shown in figure 9.

As mentioned, each automated bin 1 can comprise a respective logic control unit U installed directly therein.

Furthermore, such a logic control unit U can be connected to one or more microprocessors to perform respective specific sub-functions referring to a respective automated bin 1.

The microprocessors can communicate with each other via UART. In addition, the I/O pins of each microprocessor may be left independent for the execution of computer programs (software).

The necessary I/O pins of the control unit U can be connected to interface boards for sensors and actuators respectively buttons, microswitches, encoders, temperatures, lamps, etc. and LEDs, drives, motorizations, etc., like for example shown in figures 15, 16, and 17, better illustrated below.

By way of example, the logic control unit U may be connected to integrated circuits comprising microphones and microprocessors (not shown).

### Storage means

As already mentioned, the bin 1 comprises storage means 16 connected to the logic control unit U.

These storage means 16, connected to said logic control unit U, allow to store different data relating to the operation of the automated bin 1, such as for example the signals to be emitted by the user interaction means or the number of users who interacted with the automated bin 1.

For example, the number of users may be updated based on the detections made by said proximity sensor S1.

Furthermore, in said storage means 16 a high quantity of data can be stored, such as for example the identification codes referable to the individual users, technical data to be transmitted out of real time, such as for example the filling level of an automated bin 1.

Said storage means 16 may comprise one or more memories.

In one embodiment (not shown), said storage means 16 are arranged in a part of the bin 1, accessible only by an operator.

In particular, a reader of multiple memories SD can be allocated within the container 10, also in an area easily accessible by said operator.

Said reader can be, for example, an interface board.

In this case, the memory SD is read by the interface board and connected to the logic control unit U, which, via a video interface, can send signals to the user interaction means, and in particular video signals to the screens 31.

### Electrical power supply means

As mentioned, the electrical power supply means 15 are capable of supplying electrical power to said automated bin 1.

With particular reference to figure 10, in one embodiment of the present invention, said electrical power supply 15 comprise a transformer. Therefore, the transfer of electrical power occurs wirelessly, by means of induction from a transformer.

However, in other embodiments, the number of said transformers can be different from that described.

Said transformer 15 comprises two supports: a first support or first sheet 150, and a second support or second sheet 152.

In a first example, said first support 150 can be made of iron silicon, of the "E" shaped type and said second support 152 can be "I" shaped to close the magnetic flux generated by the first support 150.

In a second example, said second support 152 can be "E" shaped and opposite the first shaped support 150 (also "E" shaped).

In particular, the first support 150 supports the primary winding or first coil 155 of the transformer and the second support 152 of the transformer supports the secondary winding or second coil 156. The primary winding or first coil 155 is arranged on an inner wall of the housing structure 11, while the secondary winding or second coil 156 is arranged on a wall of the container 10 facing said inner wall.

The two supports 150, 152 are facing and opposite each other and, allow the magnetic circulation of the magnetic flux generated by the primary winding or first coil 155 and linked to the secondary winding or second coil 156, allowing an energy transfer.

The energy transferred will be a function of the distance or air gap 154 between the two supports 150, 152.

By applying a voltage of 50Hz to the primary winding or first coil 155, by means of the first terminal or first clamp 151, the voltage necessary for the electromechanical and electronic components of the automated bin 1 on the second terminal or second clamp 153 of the secondary winding is obtained.

The dimensions of the transformer and the section of the windings depend on the quantity of electrical current required. The voltage level will still be below the limits of human safety.

The electrical power supply means 15 can be connected, in addition to an electronic power supply board and to the logic control unit U, also to chargers, to motor means, such as for example jacks or actuators, as well as to electronic boards and electronic sensors, electronic commands, indicators, display devices, etc.

In one embodiment, said electrical power supply means 15 may comprise a plurality of transformers 15, according to the needs of the automated bin 1.

Furthermore, said electrical power supply means 15 may further comprise one or more batteries to support the operation of the circuits in case of interruption of electrical power and/or reset processes.

However, it is preferable to use a working frequency between 30kHz and 60kHz to obtain a higher efficiency than iron-silicon supports or sheets, since, at this working frequency, the losses due to the dispersed magnetic flux are reduced.

This also allows reducing the dimensions of the components and devices, keeping the power at a certain level.

In this case, unlike ferro-silicon supports or sheets, a MnZn ferrite support is used for each transformer support (i.e. each sheet), with high permeability, high saturation, low power losses. Such material is extremely useful for various electronic applications. Thereby a safe, repeatable and inexpensive approach is obtained.

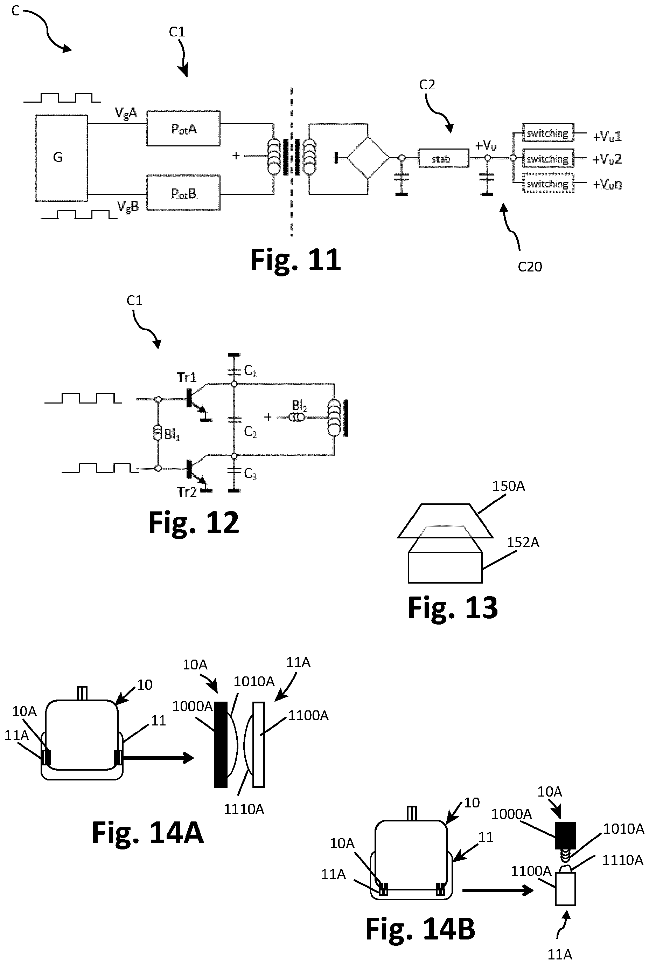

Figure 11 shows the circuit diagram C of a transformer, in which the working frequency is 50kHz, comprising a primary circuit C1 and a secondary circuit C2.

The primary circuit C1 comprises a generator G to provide voltages VgA and VgB offset from each other and two power stages PotA and PotB working alternately.

The secondary circuit C2 comprises a classic rectification circuit C20 for rectifying a voltage and obtaining an output voltage +Vu. Said rectification circuit can be a rectifier with linear stabilisation or a rectifier with switching stabilisation, according to needs. The output voltage +Vu will be that necessary for the user. From said output voltage +Vu it will be possible to obtain a plurality of voltages +Vu1, +Vu2...+Vun, each necessary for a respective device, through respective switching devices.

In the embodiment described, the rectification circuit is a rectifier with linear stabilisation indicated with the reference "stab" and the switching devices are indicated with the reference "switching".

Figure 12 shows the primary circuit C1 comprising two transistors Tr1 and Tr2 which alternately conduct with a signal coming from a generator, for example a 50kHz square-wave generator.

In particular, in the primary circuit C1 the blocking and damping coils Bl₁ and Bl₂ are depicted, and the capacitors which reduce the signal harmonics are C₁= 50nF 100V, C₂= 330nF 160V, C₃= 50nF 100V, make the fronts less steep and protect the transistors Tr1 and Tr2.

Therefore, the switching losses are almost zero. The capacitor C₂ actively participates in the resonance. Such a primary circuit C1 is similar to the Royer circuit, which, however, is self-oscillating, and therefore does not require any generator.

Thereby, however, there is easy operating and implementing linearity as the generation step will be delegated to the logic control unit U or to a further microprocessor (connected thereto) and the frequency is thus easily determined and stable.

Transistors of different types can easily conduct high currents, even of the order of tens of Ampere. For example, the two transistors can also be very robust, of the non-exclusive type, 2SD1047 from STMicroelectronics with 200V voltage and repetitive current 12A and peak current 20A. The circuit depicted is essentially a resonant DC-DC converter.

The two supports 150, 152, may comprise male/female mechanical couplings, or any automatic alignment electromagnets to minimize the air gap 154 and ensure that the primary winding or first coil 155 is properly facing the secondary winding or second coil 156.

Figure 13 shows a first portion or female part 150A mechanically integral with the first support 150, and a second portion or male part 152A mechanically integral with the second support 152.

A possible electromagnet will bring said portions 150A, 152A closer together, so that said portions are precisely facing each other.

A further energy transfer system provides for the presence of electrical contacts arranged on the winding structure 11 and on the container 10, preferably in the lower part, and more preferably in a perimeter area of the base of the container 10, taking into account moving parts or components of the container 10.

As can be seen from figure 14A, the container 10 comprises first electrical contacts or inner electrical contacts 10A and the winding structure 11 comprises second electrical contacts or outer electrical contacts 11A, which contact said first electrical contacts 10A.

In particular, each first electrical contact 10A comprises a first support element 1000A and a first spring or first sliding spring 1010A connected to said first support element 1000A.

Similarly, each second electrical contact 11A comprises a second support element 1100A and a second spring or second sliding spring 1110A connected to said second support element 1100A.

With reference to figure 14B, in the case of compression spring-type electrical contacts 10A, 11A, the structure is similar to the previous one.

In other embodiments, the electrical contacts 10A, 11A can be different from the sliding or crushing spring electrical contacts. Furthermore, the number of contacts will also be a function of needs so as to divide the current therebetween with less relative problems. By way of example, it is always necessary to restore the ground contact, in order to ensure safety, especially for the significant metal masses involved.

Furthermore, the electromechanical devices with high absorption in each automated bin 1 and all the other electronic devices will not be active simultaneously, but according to a programmed plan of use, in order to optimise energy resources.

### User interaction means

### Screens

As already described for the embodiments of Figures 2A, 2B, 3A, 3B, 3C, 3D, 3E and 3F, the user interaction means may comprise one or more audio-video devices 31, in particular one or more screens 31, for displaying videos, for example information videos relating to the operation of the automated bin 1 or advertising material.

Such screens 31 can be installed, as described, on the container 10, on the housing structure 11 or on other parts of the automated bin 1 which are visible to a user or on the power supply column 20.

In particular, a screen 31 may be installed on a power supply column 20 of a waste collection system comprising a plurality of automated bins 1.

Each screen 31 may be commanded by the logic control unit U which is connected to said screen 31.

The logic control unit U can be configured to adjust the contrast and the brightness of the screen 31 via at least one trimmer (i.e. a digital trimmer).

In this way, the contrast and the brightness of the screen 31 can be varied during the day as a function of the light incident on said screen 31.

The adjustment of the contrast and of the brightness of the screen 31 can be made automatically by means of a brightness sensor positioned at the screen 31 or programmed during the installation of the automated bin 1 in the waste collection area.

Figure 15 shows a circuit for sending signals to at least one display for displaying alphanumeric content, arranged on the automated bin 1.

Said circuit comprises at least one trimmer (which is a digital trimmer) for adjusting the contrast and the brightness of said display.

### Signalling lights

The bin 1 may be provided with one or more signalling lights 6 (shown in figure 2B), in particular LED lights.

In particular, said signalling lights are connected to the logic control unit U and controlled by said logic control unit U.

The number of signalling lights may depend on the type of bin or on the sizing of the waste collection system.

Each LED may have a specific function and be switched on or off by the logic control unit U according to the programming thereof.

An example of circuit for supplying said signalling lights is shown in figure 16.

### Audio devices

### Buzzer

The user interaction means may comprise at least one sound-emitting device 5, wherein said sound-emitting device 5 may comprise at least one buzzer 51, such as for example the buzzer 51 shown in figure 17, and/or at least one microphone 52 and/or at least one loudspeaker 53 (connected to an amplifier U11), such as for example shown in figure 18, for emitting sounds or reproducing a voice message referring to a programmed action of the automated bin 1 or to a response to a request from a user.

Said buzzer 51 and/or said loudspeaker 53 are useful for providing sounds in order to signal the beginning or the end of an action performed by the automated bin 1.

The automated bin 1 can be equipped with a sound-generating circuit for generating a sound.

An example of a sound-generating circuit is shown in figure 17.

Said sound-generating circuit comprises a buzzer 51 and a microprocessor, indicated with the reference U2, configured to communicate with the logic control unit U and activate/deactivate said buzzer 51 on command of said logic control unit U.

In particular, the microprocessor U2 is connected to the logic control unit U, for example via pin.

Said sound-generating circuit comprises a memory U3 in which at least one sound is stored for the buzzer 51, connected to the microprocessor U".

For activating the buzzer 51, the microprocessor U2 acquires the sound stored in the storage means 16 and sends a signal to said buzzer 51.

The buzzer 51 is useful for providing a sound response to each action by the user.

For example, the buzzer 51 may be activated upon pressing a button, reading a recognition device, such as for example an RFID device, a key, etc.

### Microphones and Loudspeaker

A sound-emitting device 5 may comprise one or more microphones 52 to allow the user to interact with the automated bin 1, for example to report a problem relating to the automated bin 1 or to the area surrounding said automated bin 1.

In addition, the user may record any voice messages containing a communication relating to the automated bin 1, such as for example an opinion, or advice.

The voice messages can be stored in the storage means 16 of the automated bin 1, via the logic control unit U, to be heard by an operator in order to improve the waste collection service, and/or to be sent periodically to the central unit CU or when they have been recorded.

Such voice messages may be useful to manage any reports relating to the status of the single automated bin 1 and to the area surrounding said automated bin 1.

Storing said voice messages in the storage means 16 allows the sending of said voice messages to the central unit CU to be deferred, for example to give priority to other activities that are to be performed by the automated bin 1.

Figure 18 shows a circuit to allow the user to communicate with the logic control unit U of the automated bin 1 and the logic control unit U to communicate with the user.

Said circuit comprises two microphones 52, by means of which a user can send a message to the logic control unit U, an amplifier U6 to amplify the signal generated by said microphones 52, a first trimmer U10A (which is a digital trimmer) connected to said amplifier U6 and to said logic control unit U, through a connection indicated with PB0.

An analogue-to-digital converter (not shown) is arranged on the connection indicated with PB0 to convert the analogue signal generated by said microphones 52 into a digital signal intended for the logic control unit U.

When the user speaks to the microphones 52 of the automated bin 1, the signal generated by said microphones 52 is amplified by said amplifier U6 and reaches the logic control unit U by passing through the first trimmer U10A.

The circuit also comprises a loudspeaker 53 and the logic control unit U can communicate with the user via said speaker 53.

The signal generated by the logic control unit U reaches an amplifier U11, passing through a second trimmer U10B (which is a further digital trimmer), connected to said logic control unit U, via a connection indicated with PA4, and the amplified signal exits the loudspeaker 53, connected to said amplifier U11.

On the second connection indicated with PA4, there is arranged an analogue-to-digital converter (not shown) to convert the digital signal generated by the logic control unit U into an analogue signal intended for the loudspeaker 53.

The analogue-to-digital converter and the analogue-to-digital converter may be arranged within the logic control unit U, without departing from the scope of the invention.

Said first trimmer U10A and said second trimmer U10B are arranged within a casing U10.

In particular, the circuit shown in figure 18 comprises three further amplifiers U7, U8, U9 to carry out an anti-aliasing filter to improve the analogue digital conversion of the signal generated by said microphones 52 and directed towards the logic control unit U through the connection indicated with PB0, mentioned above.

### Electronic keys

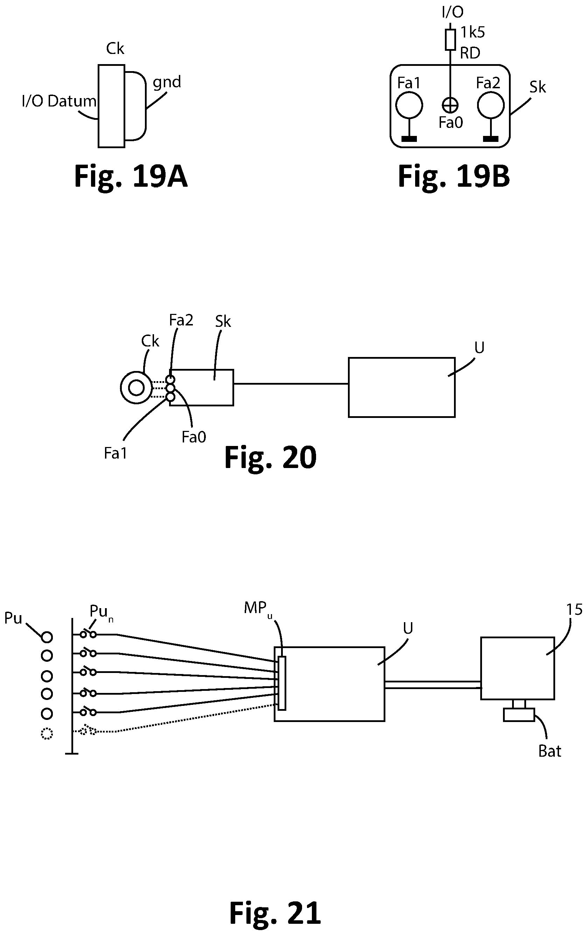

The user interaction means may comprise at least one electronic key, shown in figures 19A, to allow the user to access the functions of the automated bin 1, for example to open the cover 100A.

The electronic key is configured to contact a lock Sk, shown in figure 19B, connected to the logic control unit U.

When user recognition is required, the electronic key Ck in contact with the lock Sk receives a power supply voltage for a short time.

This is due to the fact that a first contact Fa1 or a second contact Fa2 of the lock Sk contacts the ground gnd of the electronic key Ck and a third contact Fa0 of the lock Sk contacts an output terminal indicated with I/O Datum of the electrical key Ck.

When the third contact Fa0 of the lock Sk contacts the indicated output terminal I/O Datum of the electronic key, the data is transferred from the electronic key Ck to the lock Sk and from the lock Sk to the logic control unit U, as shown in figure 20.

### User buttons

Finally, said user interaction means may comprise one or more buttons for the user, such as for example the buttons shown on the container of figure 2B and in the circuit of figure 21.

Said buttons can be allocated on the automated bin 1, for example on the container 10 and/or on the housing structure 11 and/or on the power supply column 20.

In particular, by means of the buttons a user can open an opening 100 (with his hands or feet), request information, repeat commands, ask to listen to information, etc.

Furthermore, in an alternative, the circuit shown in figure 21 can comprise one or more further microprocessors, each of which is connected to the logic control unit U.

Figure 21 shows the buttons generically called PUn that are connected to the I/O pins of the logic control unit U.

The connection between the buttons PUn and the logic control unit U takes place via the terminal MPu of the logic control unit U.

In figure 21, the logic control unit U is connected to the electrical power supply means 15 which is connected to a buffer battery Bat.

The automated bin 1 can comprise an alphanumeric keypad with a number of letters and numbers smaller than the number of letters and numbers of a keypad of known type (for example, the alphanumeric keypad can comprise three letters and three numbers), if necessary it will be connected to the logic control unit U for reading the codes assigned to users, alternatively or in combination with RFID and/or electronic keys.

### Geolocation device

Each automated bin 1 can comprise one or more geolocation devices or GPS modules.

In particular, such GPS modules are capable of providing time, date, latitude, longitude and height and recording the data for a long time. Such data can be sent to the central unit CU, for mapping and programming the emptying of the container 10.

The knowledge of GPS data will be useful for the overall management of the bins, even in large urban centres and for centralised control, also at national level.

In other embodiments, it is possible to provide further GPS devices, which, for example, are interfaced at least to the logic control unit U, allowing the management thereof.

In particular, the positioning of the bins can be digitised with GPS modules such as, for example, a module capable of providing time, date, latitude, longitude and height with recording of the data every 15 seconds and stored for 16 hours.

Other devices similar to the GPS modules, which can be interfaced to the logic control unit U or to one or more other microprocessors to manage the data received from said devices. These data can be sent to the central unit CU, for the required mapping. The knowledge of the GPS data can be very useful to the central unit CU, to follow the entire life cycle of the automated bin 1, its allocation and consequent remote management, with continuous surveillance.

### Movement means

Movement means or motors allow the opening of the covers 100A (which can be internal or external), the closing of the discharge doors, as well as the movement of any elements inserted inside the container 1, such as for example weight sensors.

It is preferable that these drives are not simultaneous for reasons of safety and efficiency in terms of use of energy resources.

In particular, the logic control unit U can drive the movement means, according to predefined management protocols, using a relative power interface board.

By working in direct current, the command switches can be mechanical, or solid state, relays with typical transistor circuits. The transistors can reach high currents.

### Actuators

Actuators may be configured to interact with the movement means or other mechanical parts of the automated bin 1 or system 2. These actuators can be pneumatic, linear, electrical, hydraulic, rotary, mechanical, electrical or screw type, respectively.

### Fans

In addition, the automated bin 1 can comprise one or more fans, each of which is positioned in a respective point of the bin 1, for example to cool a respective electrical or electronic circuit.

### RS485 connection

The use of the RS485 communication protocol allows to place several devices which use the same communication protocol on the same bus, so as to allow the communication between said devices.

### Connectivity

To connect the various devices or parts of the electronic circuits to each other, according to needs, it is possible to use a Bluetooth connection (for example an RN4870 board), a WiFi connection or one or more RS485 communication protocols or one or more MBus communication protocols, if the peripheral devices are not provided with power supply means.

The MBus protocol allows to use two electrical wires of any type, even if not intertwined. Unlike the RS485 communication protocol, the consumption of electrical current is distributed over time. Small and constant recharges of the devices occur during the pulses of the transceiver.

### WiFi connection

Direct WiFi connectivity can be obtained by using, by way of a non-exclusive example, the WiFi Module ESP8266EX SPI 4MB Flash UART/Antenna, provided with an antenna in the circuit, interfaced with the logic control unit U.

Such connectivity will also be useful in the event of a Bluetooth connection failure. In addition, this connectivity will be used to connect with smartphones, tablets, etc. Some applications can allow the thorough management of the bin 1 by the user, for their part, such as access logs, all the data collected, the weight and quality and quantity of waste dumped where it was possible to collect them, schedules, etc. This can also occur using Bluetooth.

This type of interface can also be used by service personnel for verification and maintenance, reading all the data (log) of the last days of operation and entering update data.

### Phone connection

Alternatively to the internet connection, the automated bin 1 can use as connection means a connection based on a telephone line.

By way of example, it is possible to use an industrial module such as Telit: LoRA RFM95W 868MHz transceiver module with Semtech SX1272 transceiver chip.

In order to maintain compatibility with IEEE 802.15.4 and Mbus standards and the like, the transceiver module may use OOK and FSK modulation with interference protection.

Data management can be done through a communication protocol of known type, for example SPI (Serial Peripheral Interface).

In addition, a Short Message Service (SMS) transmission can be used to allow the central unit CU to exchange messages (preferably coded messages) with the automated bin 1.

### Cleaning

With regard to the routine maintenance of the automated bins 1, they must be promptly washed, at fixed intervals, periodically, regularly and at close frequency.

In particular, washing the automated bins 1 involves the use of special machines. The washing should also contain sanitation. The activity can only be done by special machines, sometimes it is actually done in the same compactor lorries provided.

### Method for the control of waste collection

The automated bin 1 described above and the related waste collection system 2 advantageously allow to implement a method for the control of waste collection.

In particular, as mentioned, the logic control unit U can be configured to receive a signal from one or more proximity sensors whenever a user approaching an automated bin 1 is detected.

Upon receipt of such a signal, the logic control unit U may activate the user interaction means, for example to display videos explaining the correct waste management by means of the screen 31 or other advertising material.

This allows to educate a user's behaviour and optimize the waste collection cycle.

In addition, user recognition mechanisms can be activated.

In fact, as mentioned, an identification code stored in the storage means can be associated with a user. The user can then be recognized by means of such an identification code, for example by using a card held by a user or typing his or her code on a numeric keypad.

As an alternative to the use of an identification card, the RFID reader of the automated bin 1 may be able to read codes present on the waste collection bags, which may be delivered to the user on a periodic basis or purchased from specific shops.

Once the user has been recognized, the logic control unit U can read data relating to the quantity of waste thrown by said user, for example detected by said filling sensors, and store them in the storage means.

Additionally or alternatively, the logic control unit U may activate video surveillance devices to record a video comprising the actions of a user in the vicinity of the automated bin 1.

This video can be processed at a later time, for example by means of an algorithm based on artificial intelligence, to verify the correct disposal of the waste by the user.

In particular, all the data collected relating to the interaction between the user and the automated bin 1 can be sent to the central unit CU for the processing thereof.

From the user's point of view, the collected data can be used directly to open the openings 100 of the automated bins 1 automatically.

In addition, the collected data can be used to create collection and emptying patterns of the automated bins 1 based on their filling.

Therefore, the data allow to automate and optimize the management of waste collection by compactor lorries.

This facilitates the public administration in the collection of waste.

In addition, waste disposal taxes can be calibrated on the actual waste generation per individual user or household.

Users who are virtuous in waste disposal could receive a tax refund and this would create an incentive for a proper separate collection.

The automated bin 1 can be accessed by all users or only by authorized users.

### Advantages

A first advantage of the automated bin subject-matter of the invention is to monitor the waste collection cycle and the interaction with individual users.

This ensures that sorted waste collection is done correctly and the possibility of rewarding the correct behaviour of individual users, creating a virtuous cycle of waste collection, with consequent savings for the public administration.

A second advantage of the automated bin subject-matter of the invention is to allow an automation of the functions related to waste collection and transmit data to a central unit, so that said data are used to simplify, make efficient and optimize waste management.

A third advantage of the automated bin subject-matter of the invention is to measure the filling level of each automated bin.

The transmission of data relating to the filling level to the central unit makes it possible to analyse the behaviours of the users with respect to the areas in which the automated bins 1 are present, so as to intervene if necessary with targeted policies.

A fourth advantage of the automated bin subject-matter of the invention is to ensure an improvement in the cleanliness, decorum and hygiene of the area surrounding the automated bin.

A further advantage of the bin subject-matter of the invention is to allow an energy transfer to the automated bin, for example in wireless mode, by automating the functions of collection and/or emptying of the waste.

The present invention has been described, in an illustrative but nonlimiting manner, according to preferred embodiments thereof, but it is to be understood that variations and/or modifications may be made by those skilled in the art without thereby exiting from the relative scope of protection, as defined by the attached claims.

## Claims

1. Automated bin (1) for the collection of waste, comprising:
- a container (10) having at least one opening (100) for inserting waste,
- user interaction means (5, 31, 52) for interacting with a user,
- a logic control unit (U), operatively connected to said user interaction means (5, 31, 52),
- at least one proximity sensor (S1) to detect the presence of a user at said automated bin (1), wherein said at least one proximity sensor (S1) is arranged at said automated bin (1) and connected to said logic control unit (U);
- electrical power supply means (15), connected to said user interaction means (5, 31, 52), to said logic control unit (U) and to said proximity sensor (S1), to supply electrical power to said user interaction means (5, 31, 52), to said logic control unit (U) and to said proximity sensor (S1),
wherein said logic control unit (U) is configured to:
receive a signal relating to the presence of a user at said automated bin (1) by said at least one proximity sensor (S1), and
activate said user interaction means (5, 31, 52).

2. Automated bin (1) according to the preceding claim, wherein
said at least one proximity sensor (S1) comprises a code reader,
wherein
said automated bin (1) comprises:
storage means (16) in which a plurality of codes is stored, wherein
said logic control unit (U) is configured to:
receive a code read by said code reader,
compare it with the codes stored in said storage means (16), and
activate said user interaction means (5, 31, 52) if said read code is associated with at least one of said stored codes.

3. Automated bin (1) according to any one of the preceding claims, wherein said user interaction means (31, 5, 52) comprise one or more of: at least one screen (31) for viewing videos; at least one sound-emitting device (5), at least one microphone (52), at least one button, at least one video surveillance device.

4. Automated bin (1) according to claim 3, wherein
said user interaction means (31, 5, 52) comprise at least one screen (31),
wherein
said automated bin (1) comprises at least one support module (30) for supporting said at least one screen (31), wherein said support module (30) is removably coupled to a portion of said container (10), and
wherein
said at least one screen (31) is installed on said support module (30).

5. Automated bin (1) according to the preceding claim, wherein said electrical power supply means (15) comprise at least one photovoltaic solar panel (40), arranged on said support module (30).

6. Automated bin (1) according to any one of the preceding claims, wherein said automated bin (1) comprises at least one filling sensor, connected to said logic control unit (U), to detect a filling parameter of said container (10).

7. Automated bin (1) according to claims 2 and 6, wherein each stored code is referred to a user and wherein said logic control unit (U) is configured to read the values of said filling parameter detected from said at least one filling sensor and to store data relating to the variation of said filling parameter in said storage means (16) for each user.

8. Automated bin (1) according to any one of the preceding claims, wherein said automated bin (1) comprises a housing structure (11) for housing said container (10).

9. Automated bin (1) according to claim 8, wherein said electrical power supply means (15) comprise at least one transformer (15),
wherein
said at least one transformer (15) comprises:
- a first support (150) coupled to said housing structure (11),
- a first coil (155) wound on said first support (150), and
- a first terminal (151) connected to said first coil (155) and to an electrical power supply network, and
- a second support (152) coupled to said container (10),
- a second coil (156) wound on said second support (152), and
- a second terminal (153) connected to said second coil (156),
so as to generate a magnetic flux between said first coil (155) and said second coil (156) when a power supply voltage is applied to said first coil (155) by means of said first terminal (151).

10. Automated bin (1) according to claim 8, wherein said electrical power supply means (15) comprise:
- at least one first electrical contact (10A) arranged on said container (10),
- at least one second electrical contact (11A) arranged on said housing structure (11),
wherein
said at least one first electrical contact (10A) contacts said at least one second electrical contact (11A),
wherein
said at least one first electrical contact (10A) comprises a first support (1000A) and a first spring (1010A), connected to said first support (1000A), and
wherein
said at least one second electrical contact (11A) comprises a second support (1100A) and a second spring (1110A), connected to said second support (1100A).

11. Waste collection system (2), comprising:
- at least one automated bin (1) for the collection of waste according to any one of the preceding claims, and
- a supply column (20) connected to a source of electricity and to said electrical power supply means (15).
